# EUROPÄISCHE PATENTSCHRIFT

(11) **EP 2 632 796 B1**
(45) Veröffentlichungstag und Bekanntmachung des Hinweises auf die Patenterteilung: **25.07.2018**
(21) Anmeldenummer: 11785319.2
(22) Anmeldetag: 20.10.2011
(51) Int. Cl.: B64D 11/06

(54) **SITZBEFESTIGUNGSVORRICHTUNG**
SEAT FASTENING DEVICE
DISPOSITIF DE FIXATION DE SIÈGE

(30) Priorität: 30.04.2011 DE 102011100107; 28.10.2010 DE 102010049703
(43) Veröffentlichungstag der Anmeldung: 04.09.2013
(73) Patentinhaber: Recaro Aircraft Seating GmbH & Co. KG, 74523 Schwäbisch Hall (DE)
(72) Erfinder: MEJUHAS, Marsel, 74523 Schwaebisch Hall (DE)
(74) Vertreter: Daub, Thomas
(86) Internationale Anmeldenummer: PCT/EP2011/005277
(87) Internationale Veröffentlichungsnummer: WO 2012/055508

(56) Entgegenhaltungen:
- WO-A1-2007/133823
- DE-A1-102007 014 420
- DE-U1- 29 825 000
- US-A- 4 449 875

## Beschreibung

### Stand der Technik

Die Erfindung geht aus von einer Sitzbefestigungsvorrichtung nach dem Oberbegriff des Patentanspruchs 1, wie z.B. offenbart in US4449875. Es ist bereits eine Sitzbefestigungsvorrichtung zur Befestigung eines Sitzes oder zum Festzurren von Lasten an einer an einem Boden befestigten Befestigungsschiene, mit wenigstens einem beweglichen Befestigungsmittel, das zur Kopplung mit der Befestigungsschiene vorgesehen ist, einer Kraftspeichereinheit, einer Betätigungseinheit und einer Getriebeeinheit bekannt.

Bei den bekannten Lösungen kann ein Sitz oder eine Last an einer Befestigungsschiene befestigt werden, indem eine Kraftspeichereinheit bei einem Befestigungsvorgang vorgespannt wird. Ein Entriegelungsvorgang wird von der Kraftspeichereinheit deshalb unterstützt und führt bei einem defekten Verriegelungselement zu einem automatischen und ungewollten Öffnen der Sitzbefestigungsvorrichtung.

Der Erfindung liegt insbesondere die Aufgabe zugrunde, eine gattungsgemäße Sitzbefestigungsvorrichtung bereitzustellen, durch die eine besonders sichere Befestigung eines Sitzes an einer Befestigungsschiene ermöglicht werden kann.

Diese Aufgabe wird durch eine Sitzbefestigungsvorrichtung gemäß dem Patentanspruch 1 gelöst. Weitere vorteilhafte Ausführungen der Erfindung können den Unteransprüchen entnommen werden.

### Vorteile der Erfindung

Die Erfindung geht aus von einer Sitzbefestigungsvorrichtung zur Befestigung eines Sitzes oder zum Festzurren von Lasten an einer an einem Boden befestigten Befestigungsschiene, mit den Merkmalen des Anspruchs 1. Es wird vorgeschlagen, dass die Getriebeeinheit dazu vorgesehen ist, bei einem Entriegelungsvorgang die Kraftspeichereinheit vorzuspannen und bei einem Verriegelungsvorgang die Kraftspeichereinheit zu entspannen. Unter einer "Getriebeeinheit" soll dabei insbesondere eine Einheit zur Übertragung einer Kraft und/oder zur Umwandlung einer Bewegung, insbesondere einer Rotationsbewegung in eine Linearbewegung, verstanden werden. Unter einer "Kraftspeichereinheit" soll in diesem Zusammenhang insbesondere eine Einheit verstanden werden, die dazu vorgesehen ist, Energie in Form einer Spannkraft zu speichern und insbesondere einer mechanisch aufgebrachten Kraft entgegenzuwirken. Durch eine derartige Ausgestaltung kann ein unbeabsichtigtes oder mutwilliges Entriegeln der Sitzbefestigungsvorrichtung von Hand vorteilhaft vermieden und die Sicherheit für einen Benutzer erhöht werden. Außerdem kann eine zum Verriegeln der Sitzbefestigungsvorrichtung benötigte Kraft vorteilhaft verringert und ein Einsatz eines Verriegelungswerkzeugs vermieden werden.

Zudem wird vorgeschlagen, dass zwischen der Getriebeeinheit und der Kraftspeichereinheit ein Auflagemittel zur direkten Kraftübertragung zwischen der Getriebeeinheit und der Kraftspeichereinheit angeordnet ist. Unter "direkter Kraftübertragung" soll in diesem Zusammenhang insbesondere verstanden werden, dass ein Kraftfluss von der Getriebeeinheit über das Auflagemittel, das auch mehrteilig ausgeführt sein kann, auf direktem Weg in die Kraftspeichereinheit eingeleitet ist und dass eine Einleitung des Kraftflusses von der Getriebeeinheit in die Kraftspeichereinheit insbesondere unter Vermeidung einer Kraftbelastung des beweglichen Befestigungsmittels erfolgt. Dadurch kann durch eine gleichmäßige Kraftverteilung vorteilhaft ein geringer Verschleiß von Bauteilen erzielt werden, und Anforderungen in Bezug auf eine Härte von Oberflächen der Bauteile können reduziert werden.

Umfasst die Kraftspeichereinheit zumindest eine der Getriebeeinheit zugewandte Oberfläche, durch die das Auflagemittel zur direkten Kraftübertragung zwischen der Getriebeeinheit und der Kraftspeichereinheit gebildet ist, kann eine besonders einfache und teilesparende Lösung bereitgestellt werden.

Wenn das Auflagemittel und das Befestigungsmittel jeweils zumindest ein Mitnahmeelement aufweisen und die Mitnahmeelemente bei einem Verriegelungsvorgang zur Mitnahme des Befestigungsmittels zusammenwirken, kann eine besonders einfache und gleichmäßige Kraftübertragung von der Getriebeeinheit in die Kraftspeichereinheit erzielt werden.

Wenn nach einem Entriegelungsvorgang das Mitnahmeelement des Befestigungsmittels ohne eine Belastung durch Kräfte außer der Schwerkraft auf dem Mitnahmeelement des Auflagemittels aufliegt, so dass das Mitnahmeelement des Auflagemittels eine Halterung für das Befestigungsmittel bildet, kann auf konstruktiv einfache Weise eine Unverlierbarkeit des Befestigungsmittels gewährleistet werden.

In einer weiteren Ausgestaltung wird vorgeschlagen, dass die Getriebeeinheit dazu vorgesehen ist, eine Rotation der Betätigungseinheit in eine Bewegung des beweglichen Befestigungsmittels umzuwandeln. Dadurch kann eine besonders einfache Kopplung des Befestigungsmittels mit der Befestigungsschiene erreicht werden.

Ferner wird vorgeschlagen, dass die Sitzbefestigungsvorrichtung einen Werkzeugeingriff aufweist, der dazu vorgesehen ist, ein Entriegelungswerkzeug zur Durchführung des Entriegelungsvorgangs aufzunehmen, wodurch ein Entkoppeln des Befestigungsmittels von der Befestigungsschiene vorteilhaft mit einem Hilfswerkzeug durchgeführt werden kann. Unter einem "Werkzeugeingriff" soll in diesem Zusammenhang insbesondere eine Ausnehmung, bevorzugt ein Innensechskant, und/oder ein Fortsatz verstanden werden, wodurch ein korrespondierendes Entriegelungswerkzeug gekoppelt werden kann.

In einer vorteilhaften Ausgestaltung kann die Sitzbefestigungsvorrichtung zumindest zwei fest angeordnete Befestigungsmittel aufweisen, die von dem beweglichen Befestigungsmittel ausgehend hintereinander in einer Richtung angeordnet sind, so dass die Betätigungseinheit bei gleichzeitig hoher Ergonomie besonders kompakt ausgebildet werden kann.

Es wird des Weiteren vorgeschlagen, dass die Betätigungseinheit einen schwenkbar gelagerten Betätigungshebel aufweist, wodurch ein besonders einfacher Aufbau der Sitzbefestigungsvorrichtung erreicht werden kann.

Besonders bevorzugt ist der Werkzeugeingriff von einer Schwenkachse der Betätigungseinheit beabstandet angeordnet, wodurch eine besonders einfache Handhabung der Betätigungseinheit erreicht werden kann.

Erfolgt der Entriegelungsvorgang durch eine Drehung des Betätigungshebels um 180° oder weniger, kann ein Entriegeln der Sitzbefestigungsvorrichtung besonders komfortabel erfolgen. Bevorzugt erfolgt der Entriegelungsvorgang durch eine Drehung des Betätigungshebels um weniger als 100°.

Weist die Getriebeeinheit ein Kurvengetriebe auf, kann durch eine Bewegung der Betätigungseinheit mit wenigen beweglichen Teilen eine Bewegung des zumindest einen Befestigungsmittels erreicht werden.

Steht das Kurvengetriebe in zumindest einem Betriebszustand in Wirkverbindung mit einem zu befestigenden Sitzgestell, können vorteilhaft zusätzliche Bauteile an der Sitzbefestigungsvorrichtung eingespart werden.

Des Weiteren wird vorgeschlagen, dass die Kraftspeichereinheit ein Federpaket aufweist, wodurch eine Kraft besonders einfach aufgenommen und abgegeben werden kann.

Ist das Federpaket koaxial zu einer Bewegungsrichtung des Befestigungsmittels angeordnet, kann ein besonders kompakter Aufbau der Sitzbefestigungsvorrichtung erreicht werden.

Ferner wird vorgeschlagen, dass der Betätigungshebel in einem geschlossenen Zustand in einem Grundkörper versenkt ist. Dadurch kann ein mutwilliger Entriegelungsvorgang von Hand vorteilhaft vermieden werden.

### Zeichnung

Weitere Vorteile ergeben sich aus der folgenden Zeichnungsbeschreibung. In der Zeichnung sind zwei Ausführungsbeispiele der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische, schematische Ansicht eines Sitzgestells eines Fluggastsitzes mit zwei Sitzbefestigungsvorrichtungen,
- Fig. 2: eine perspektivische Ansicht einer Befestigungsschiene,
- Fig. 3: einen Schnitt durch eine Sitzbefestigungsvorrichtung in einem verriegelten Zustand,
- Fig. 3A: einen Ausschnitt der Sitzbefestigungsvorrichtung gemäß der Fig. 3 mit einer alternativen Ausführung einer Kraftspeichereinheit mit integriertem Auflagemittel,
- Fig. 4: die Sitzbefestigungsvorrichtung gemäß der Fig. 3 im verriegelten Zustand in einer Darstellung einer Schnittebene entlang einer Linie I-I',
- Fig. 5: einen Schnitt durch die Sitzbefestigungsvorrichtung gemäß der Fig. 3 in einem entriegelten Zustand,
- Fig. 6: die Sitzbefestigungsvorrichtung gemäß der Fig. 5 im entriegelten Zustand in einer Darstellung einer Schnittebene entlang der Linie II-II',
- Fig. 7: einen Schnitt durch ein weiteres Ausführungsbeispiel einer Sitzbefestigungsvorrichtung in einem verriegelten Zustand,
- Fig. 8: die Sitzbefestigungsvorrichtung gemäß der Fig. 7 im verriegelten Zustand in einer Darstellung einer Schnittebene entlang einer Linie III-III',
- Fig. 9: einen Schnitt durch die Sitzbefestigungsvorrichtung gemäß der Fig. 7 in einem entriegelten Zustand und
- Fig. 10: die Sitzbefestigungsvorrichtung gemäß der Fig. 9 im entriegelten Zustand in einer Darstellung einer Schnittebene entlang einer Linie IV-IV'.

### Beschreibung der Ausführungsbeispiele

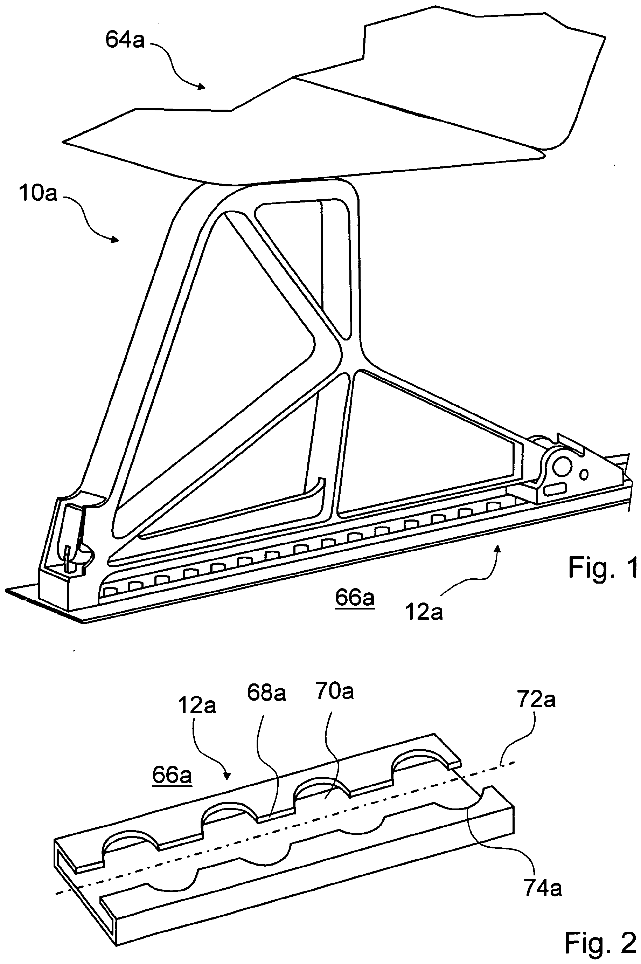

Figur 1 zeigt schematisch ein Sitzgestell 10a eines Sitzes 64a, der als Fluggastsitz ausgebildet ist, in einer perspektivischen Ansicht. Das Sitzgestell 10a ist durch zwei Sitzbefestigungsvorrichtungen an eine Befestigungsschiene 12a gekoppelt. Die Befestigungsschiene 12a ist an einem Boden 66a einer Flugzeugkabine befestigt. In einem geöffneten Zustand der Sitzbefestigungsvorrichtungen lässt sich das Sitzgestell 10a entlang der Befestigungsschiene 12a verschieben.

Die Befestigungsschiene 12a ist in einer Detailansicht in Figur 2 näher dargestellt. Die Befestigungsschiene 12a schließt mit ihrer Oberseite bündig mit dem Boden 66a ab. Die Befestigungsschiene 12a wird von einem Hohlprofil gebildet, das an seiner Oberseite mit einander zugewandten Profilflanken 68a einen Längskanal 70a begrenzt. Der Längskanal 70a, der sich in einer Längsrichtung 72a erstreckt, die vorzugsweise einer Flugrichtung entspricht, weist in einem vorgegebenen Maß seinen freien Eintrittsquerschnitt verbreiternde Durchtrittsöffnungen 74a auf, die voneinander einen gleichmäßigen Abstand aufweisen und bohrungsartig ausgeführt sind. Diese Ausführung einer Befestigungsschiene 12a ist im Stand der Technik bekannt und wird hier nicht näher beschrieben.

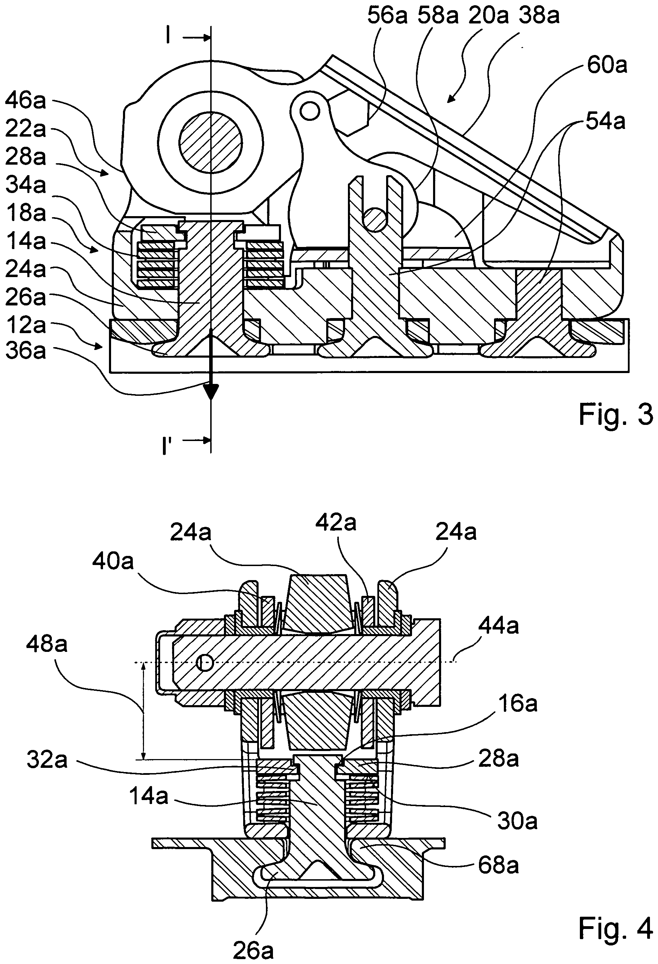

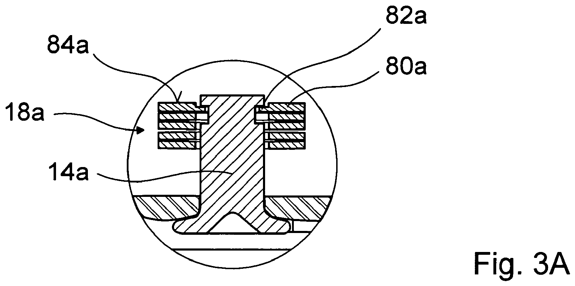

Eine Sitzbefestigungsvorrichtung ist in Figur 3 in einer Schnittansicht in einem geschlossenen Zustand dargestellt. Die Sitzbefestigungsvorrichtung weist ein bewegliches Befestigungsmittel 14a, eine Kraftspeichereinheit 18a, eine Betätigungseinheit 20a und eine Getriebeeinheit 22a auf.

Das Befestigungsmittel 14a ist in einem Grundkörper 24a der Sitzbefestigungsvorrichtung entlang einer Bewegungsrichtung 36a linear beweglich angeordnet. An einem Ende des Befestigungsmittels 14a ist ein Befestigungsfuß 26a angeordnet, der zur Kopplung mit der Befestigungsschiene 12a vorgesehen ist. An einem dem Befestigungsfuß 26a gegenüberliegenden Ende weist das Befestigungsmittel 14a ein von einer Seitenfläche einer Ausdrehung gebildetes Mitnahmeelement 16a auf und ist mit einem von einem Auflagering gebildeten Auflagemittel 28a gekoppelt. Der Auflagering weist ebenfalls ein Mitnahmeelement 32a auf, das einstückig an den Auflagering angeformt ist und einen nach oben offenen Absatz bildet. Das Auflagemittel 28a ist zwischen der Getriebeeinheit 22a und der Kraftspeichereinheit 18a zu einer direkten Kraftübertragung zwischen der Getriebeeinheit 22a und der Kraftspeichereinheit 18a angeordnet, wie nachfolgend beschrieben wird. Dazu umschließt der Auflagering das Befestigungsmittel 14a teilweise und stellt eine Auflagefläche 30a für die Kraftspeichereinheit 18a bereit. Die Auflagefläche 30a und eine Unterseite des Mitnahmeelements 32a des Auflagerings sind bündig.

Der Grundkörper 24a weist ferner zwei fest angeordnete Befestigungsmittel 54a auf, die von dem beweglichen Befestigungsmittel 14a ausgehend hintereinander in einer Richtung angeordnet sind. Das bewegliche Befestigungsmittel 14a ist somit an einem seitlichen Ende des Grundkörpers 24a befestigt.

Die Kraftspeichereinheit 18a weist ein Federpaket 34a auf, das am Grundkörper 24a und am Auflagering anliegt. Eine auf den Auflagering ausgeübte Kraft wird durch das Federpaket 34a aufgenommen. Das Federpaket 34a ist von Tellerfedern gebildet, die koaxial zu der Bewegungsrichtung 36a des Befestigungsmittels 14a angeordnet sind.

Grundsätzlich ist auch eine alternative Ausführung der Kraftspeichereinheit 18a denkbar, in der, wie in der Figur 3A dargestellt, eine der Getriebeeinheit 22a am nächsten angeordnete Tellerfeder 80a mit einem Mitnahmeelement 82a ausgestattet ist und in der eine der Getriebeeinheit 22a zugewandte Oberfläche der Tellerfeder 80a ein Auflagemittel 84a zur direkten Kraftübertragung zwischen der Getriebeeinheit 22a und der Kraftspeichereinheit 18a bildet.

Die Betätigungseinheit 20a ist am Grundkörper 24a angeordnet und weist einen Betätigungshebel 38a auf, der sich in einer in der Fig. 3 dargestellten Ausgangsposition befindet. Der Betätigungshebel 38a ist an einem Ende als Starrgabel mit zwei Armen 40a, 42a ausgebildet (Fig. 4) und in Mittelpunkten der Arme 40a, 42a um eine im Grundkörper 24a senkrecht zur Schnittebene der Fig. 3 angeordnete Schwenkachse 44a schwenkbar gelagert. Der Betätigungshebel 38a erstreckt sich über einen Großteil des Grundkörpers 24a oberhalb der Befestigungsschiene 12a. In dem in der Fig. 3 gezeigten geschlossenen Zustand ist der Betätigungshebel 38a im Grundkörper 24a versenkt.

An der Betätigungseinheit 20a ist die Getriebeeinheit 22a angeordnet, die ein Kurvengetriebe 46a aufweist. Das Kurvengetriebe 46a umfasst zwei Kurvenscheiben, die jeweils einstückig mit je einem der Arme 40a, 42a der Starrgabel des Betätigungshebels 38a ausgebildet sind. Es sind jedoch auch getrennt ausgebildete, dem Fachmann als sinnvoll erscheinende Ausführungsformen denkbar.

Um den Grundkörper 24a gegen ein Verschieben entlang der Befestigungsschiene 12a weiter zu sichern, weist die Sitzbefestigungsvorrichtung ein zweites Kurvengetriebe 58a auf, welches ein Längsbefestigungsmittel 60a in Ausnehmungen der Befestigungsschiene 12a bewegt.

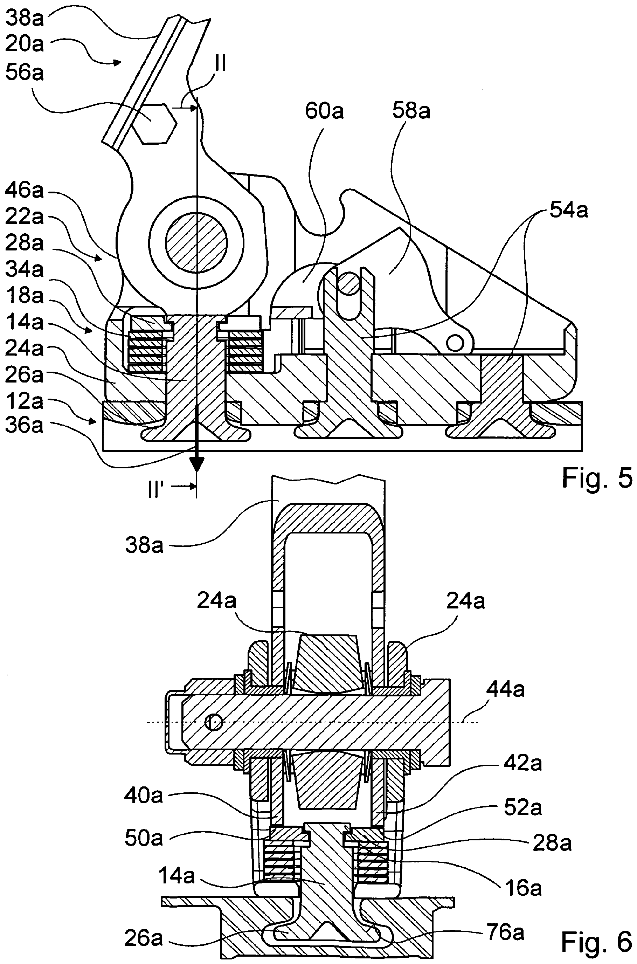

Bei einer Rotation des Betätigungshebels 38a kommt das Kurvengetriebe 46a, ohne das Befestigungsmittel 14a zu berühren, seitlich am Befestigungsmittel 14a vorbei in Kontakt mit dem vom Auflagering gebildeten Auflagemittel 28a (Fig. 6). Die Rotation des Betätigungshebels 38a wird dabei in eine lineare Bewegung des beweglichen Auflagerings umgewandelt, wobei das Befestigungsmittel 14a durch das Kurvengetriebe 46a kräftemäßig unbelastet bleibt.

Bei einem Entriegelungsvorgang wird der Betätigungshebel 38a um etwa 95° gedreht. Dadurch drückt die Getriebeeinheit 22a mit ihrem Kurvengetriebe 46a an zwei Auflagestellen 50a, 52a, die sich in senkrechter Richtung zur Bewegungsrichtung 36a gegenüberstehen, gegen den Auflagering, der in Bewegungsrichtung 36a zur Befestigungsschiene 12a hin bewegt wird. Das Federpaket 34a erfährt zwischen dem Grundkörper 24a und dem Auflagering eine Kompression und wird somit vorgespannt.

Um entgegen einer Federkraft des Federpakets 34a die Sitzbefestigungsvorrichtung zu entriegeln, weist der Betätigungshebel 38a einen Werkzeugeingriff 56a auf. Durch den Einsatz eines in den Werkzeugeingriff 56a greifenden Entriegelungswerkzeugs (nicht dargestellt) lässt sich die Sitzbefestigungsvorrichtung entriegeln. Der Werkzeugeingriff 56a ist von der Schwenkachse 44a des Betätigungshebels 38a der Betätigungseinheit 20a beabstandet angeordnet, wodurch die Betätigungseinheit 20a besonders einfach gehandhabt werden kann. Zur Durchführung des Entriegelungsvorgangs mit einem Entriegelungswerkzeug sind auch andere, dem Fachmann als sinnvoll erscheinende Ausführungsformen denkbar, wie insbesondere ein Schraubendrehereingriff im Grundkörper 24a.

In Figur 5 ist die Sitzbefestigungsvorrichtung in einem entriegelten Zustand dargestellt. Am Ende des Entriegelungsvorgangs liegt das Mitnahmeelement 16a des Befestigungsmittels 14a ohne eine Belastung durch andere Kräfte außer der Schwerkraft auf dem Mitnahmeelement 32a des Auflagemittels 28a auf, das dadurch eine Halterung für das Befestigungsmittel 14a bildet, die ein Verlieren des Befestigungsmittels 14a verhindert. Das bewegliche Befestigungsmittel 14a ist von der Befestigungsschiene 12a gelöst, innerhalb von Grenzen, die durch die Kopplung mit dem Auflagemittel 28a festgelegt sind, frei beweglich und erlaubt ein Verschieben der Sitzbefestigungsvorrichtung entlang der Befestigungsschiene 12a, wenn zusätzlich das Längsbefestigungsmittel 60a durch das zweite Kurvengetriebe 58a angehoben ist.

Ein Verriegelungsvorgang wird durch eine Betätigung des Betätigungshebels 38a zurück in die Ausgangsposition ausgelöst. Dabei schwenkt der Betätigungshebel 38a um etwa 95°. Die Federkraft des Federpakets 34a unterstützt den Verriegelungsvorgang. Ein Entriegelungswerkzeug kann daher für den Verriegelungsvorgang vermieden werden. Durch eine Rotation des Betätigungshebels 38a zurück in die Ausgangsposition verkürzt das Kurvengetriebe 46a der Getriebeeinheit 22a einen Abstand 48a des von dem Auflagering gebildeten Auflagemittels 28a von der Schwenkachse 44a, lässt eine Bewegung des Auflagerings entgegen der Bewegungsrichtung 36a zu und entspannt dadurch teilweise das Federpaket 34a der Kraftspeichereinheit 18a. In der Ausgangsposition ist das Kurvengetriebe 46a von dem Auflagemittel 28a abgehoben. Nach der teilweisen Entspannung des Federpakets 34a wird der Befestigungsfuß 26a des Befestigungsmittels 14a von einer verbleibenden Federkraft des Federpakets 34a durch ein Zusammenwirken des Mitnahmeelements 16a des Befestigungsmittels 14a und des Mitnahmeelements 32a des Auflagemittels 28a, durch das das Befestigungsmittel 14a von der Entspannungsbewegung des Federpakets 34a mitgenommen wird, gegen eine Unterseite 76a der Profilflanken 68a der Befestigungsschiene 12a gepresst (Fig. 4).

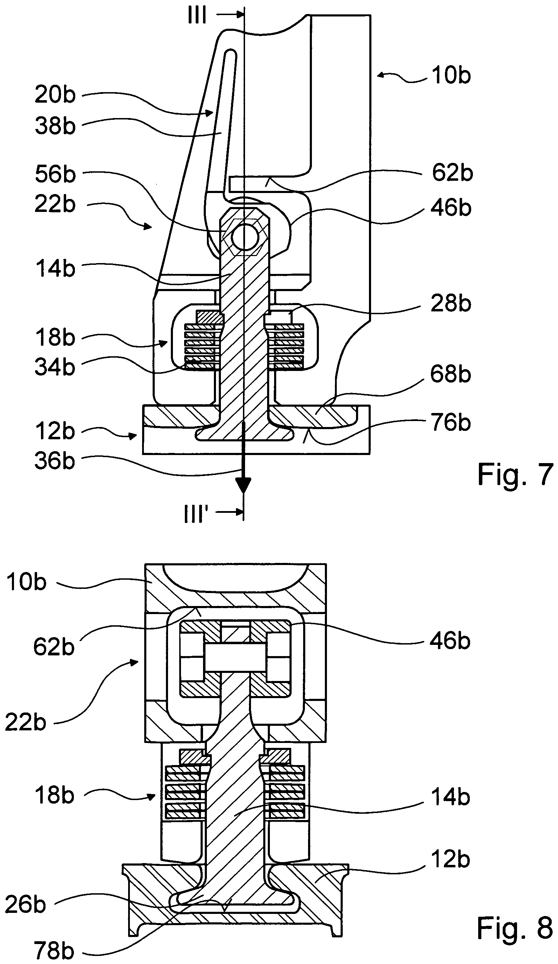

In den Figuren 7 bis 10 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des anderen Ausführungsbeispiels, insbesondere der Figuren 3 bis 6, verwiesen werden kann. Zur Unterscheidung der Ausführungsbeispiele ist der Buchstabe a in den Bezugszeichen des Ausführungsbeispiels in den Figuren 3 bis 6 durch den Buchstaben b in den Bezugszeichen des Ausführungsbeispiels der Figuren 7 bis 10 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des anderen Ausführungsbeispiels, insbesondere der Figuren 3 bis 6, verwiesen werden.

Figur 7 und Figur 8 zeigen eine Sitzbefestigungsvorrichtung auf einer Befestigungsschiene 12b mit einer Getriebeeinheit 22b und einer Betätigungseinheit 20b, die einen Betätigungshebel 38b aufweist, in einem verriegelten Zustand. Der Betätigungshebel 38b ist schwenkbar an einem linear beweglichen Befestigungsmittel 14b gelagert. Eine Kraftspeichereinheit 18b, die als Federpaket 34b ausgebildet ist, übt eine Federkraft entgegen einer Bewegungsrichtung 36b aus. Der Betätigungshebel 38b ist einstückig mit einem Kurvengetriebe 46b der Getriebeeinheit 22b ausgebildet.

Um entgegen einer Federkraft des Federpakets 34b die Sitzbefestigungsvorrichtung zu entriegeln, weist der Betätigungshebel 38b einen Werkzeugeingriff 56b auf. Durch den Einsatz eines in den Werkzeugeingriff 56b greifenden Entriegelungswerkzeugs (nicht dargestellt) lässt sich die Sitzbefestigungsvorrichtung entriegeln.

Bei einer Rotation des Betätigungshebels 38b kommt das Kurvengetriebe 46b in Wirkverbindung mit einer Abstützfläche 62b eines zu befestigenden Sitzgestells 10b. Dabei wird das Federpaket 34b in der Bewegungsrichtung 36b zusammengedrückt, das Befestigungsmittel 14b löst sich mit einem als Befestigungsfuß 26b ausgebildeten unteren Ende von einer Unterseite 76b von Profilflanken 68b der Befestigungsschiene 12b und bewegt sich relativ zum Sitzgestell 10b in Bewegungsrichtung 36b auf eine Innenseite eines Bodens 78b eines die Befestigungsschiene 12b bildenden Hohlprofils zu.

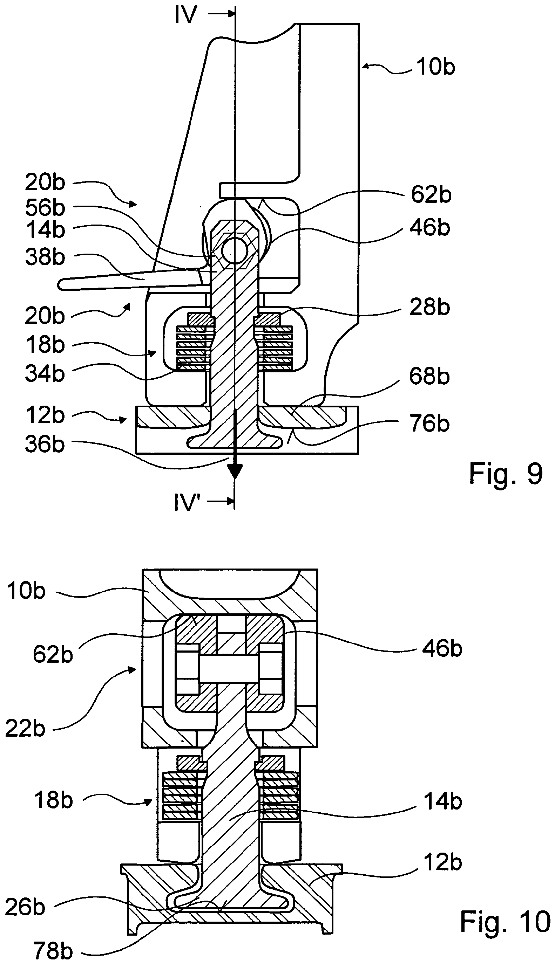

Figur 9 und Figur 10 zeigen die Sitzbefestigungsvorrichtung in einem entriegelten Zustand. Das Befestigungsmittel 14b ist von der Unterseite 76b der Profilflanken 68b der Befestigungsschiene 12b gelöst und erlaubt eine Bewegung der Sitzbefestigungsvorrichtung entlang der Befestigungsschiene 12b.

**Bezugszeichen**

| | | | |
|---|---|---|---|
| 10 | Sitzgestell | 56 | Werkzeugeingriff |
| 12 | Befestigungsschiene | 58 | Kurvengetriebe |
| 14 | Befestigungsmittel | 60 | Längsbefestigungsmittel |
| 16 | Mitnahmeelement | 62 | Abstützfläche |
| 18 | Kraftspeichereinheit | 64 | Sitz |
| 20 | Betätigungseinheit | 66 | Boden |
| 22 | Getriebeeinheit | 68 | Profilflanke |
| 24 | Grundkörper | 70 | Längskanal |
| 26 | Befestigungsfuß | 72 | Längsrichtung |
| 28 | Auflagemittel | 74 | Durchtrittsöffnung |
| 30 | Auflagefläche | 76 | Unterseite |
| 32 | Mitnahmeelement | 78 | Boden |
| 34 | Federpaket | 80 | Tellerfeder |
| 36 | Bewegungsrichtung | 82 | Mitnahmeelement |
| 38 | Betätigungshebel | 84 | Auflagemittel |
| 40 | Arm | | |
| 42 | Arm | | |
| 44 | Schwenkachse | | |
| 46 | Kurvengetriebe | | |
| 48 | Abstand | | |
| 50 | Auflagestelle | | |
| 52 | Auflagestelle | | |
| 54 | Befestigungsmittel | | |

## Patentansprüche

1. Sitzbefestigungsvorrichtung zur Befestigung eines Sitzes oder zum Festzurren von Lasten an einer an einem Boden (66a) befestigten Befestigungsschiene (12a; 12b), mit zumindest einem Grundkörper (24a; 24b), mit wenigstens einem beweglichen Befestigungsmittel (14a; 14b), das zur Kopplung mit der Befestigungsschiene (12a; 12b) vorgesehen ist, einer Kraftspeichereinheit (18a; 18b), einer Betätigungseinheit (20a; 20b) und einer Getriebeeinheit (22a; 22b), wobei die Getriebeeinheit (22a; 22b) dazu ausgebildet ist, bei einem Entriegelungsvorgang die Kraftspeichereinheit (18a; 18b) vorzuspannen, bei einem Verriegelungsvorgang die Kraftspeichereinheit (18a; 18b) zu entspannen und eine Rotation der Betätigungseinheit (20a; 20b) in eine Bewegung des beweglichen Befestigungsmittels (14a; 14b) umzuwandeln, wobei die Betätigungseinheit (20a; 20b) einen schwenkbar gelagerten Betätigungshebel (38a; 38b) aufweist, **gekennzeichnet durch** einen Werkzeugeingriff (56a), der dazu ausgebildet ist, ein Entriegelungswerkzeug zur Durchführung des Entriegelungsvorgangs aufzunehmen, wobei der Betätigungshebel (38a; 38b) in einem geschlossenen Zustand in dem Grundkörper (24a; 24b) versenkt ist.

2. Sitzbefestigungsvorrichtung nach Anspruch 1, **dadurch gekennzeichnet, dass** zwischen der Getriebeeinheit (22a; 22b) und der Kraftspeichereinheit (18a; 18b) ein Auflagemittel (28a; 84a) zu einer direkten Kraftübertragung zwischen der Getriebeeinheit (22a; 22b) und der Kraftspeichereinheit (18a; 18b) angeordnet ist.

3. Sitzbefestigungsvorrichtung zumindest nach Anspruch 2, **dadurch gekennzeichnet, dass** die Kraftspeichereinheit (18a; 18b) zumindest eine der Getriebeeinheit (22a; 22b) zugewandte Oberfläche umfasst, die das Auflagemittel (28a; 84a) bildet.

4. Sitzbefestigungsvorrichtung nach Anspruch 2, **dadurch gekennzeichnet, dass** das Auflagemittel (28a; 84a) und das Befestigungsmittel (14a; 14b) jeweils zumindest ein Mitnahmeelement (16a, 32a; 82a) aufweisen und die Mitnahmeelemente (16a, 32a; 82a) bei einem Verriegelungsvorgang zur Mitnahme des Befestigungsmittels (14a; 14b) zusammenwirken.

5. Sitzbefestigungsvorrichtung nach Anspruch 4, **dadurch gekennzeichnet, dass** nach einem Entriegelungsvorgang das Mitnahmeelement (16a) des Befestigungsmittels (14a; 14b) ohne eine Belastung durch Kräfte außer der Schwerkraft auf dem Mitnahmeelement (32a; 82a) des Auflagemittels (28a; 84a) aufliegt, das dadurch eine Halterung für das Befestigungsmittel (14a; 14b) bildet.

6. Sitzbefestigungsvorrichtung nach einem der vorhergehenden Ansprüche, **dadurch gekennzeichnet, dass** der Werkzeugeingriff (56a) von einer Schwenkachse der Betätigungseinheit (20a; 20b) beabstandet angeordnet ist.

7. Sitzbefestigungsvorrichtung nach einem der vorhergehenden Ansprüche, **dadurch gekennzeichnet, dass** der Entriegelungsvorgang durch eine Drehung des Betätigungshebels (38a; 38b) um 180° oder weniger erfolgt.

8. Sitzbefestigungsvorrichtung nach einem der vorhergehenden Ansprüche, **dadurch gekennzeichnet, dass** die Getriebeeinheit (22a; 22b) ein Kurvengetriebe (46a; 46b) aufweist.

9. Sitzbefestigungsvorrichtung nach Anspruch 8, **dadurch gekennzeichnet, dass** das Kurvengetriebe (46b) in zumindest einem Betriebszustand in Wirkverbindung mit einem zu befestigenden Sitzgestell (10b) steht.

10. Sitzbefestigungsvorrichtung nach einem der vorhergehenden Ansprüche, **dadurch gekennzeichnet, dass** die Kraftspeichereinheit (18a; 18b) ein Federpaket (34a; 34b) aufweist.

11. Sitzbefestigungsvorrichtung nach Anspruch 10, **dadurch gekennzeichnet, dass** das Federpaket (34a; 34b) koaxial zu der Bewegungsrichtung (36a; 36b) des Befestigungsmittels (14a; 14b) angeordnet ist.

12. Sitz, insbesondere Fluggastsitz, mit einer Sitzbefestigungsvorrichtung nach einem der vorhergehenden Ansprüche.

## Claims

1. Seat fastening device for fastening a seat or for securing loads to a fastening rail (12a; 12b) which is fixed to a ground (66a), with at least one base body (24a; 24b), with at least one movable fastening means (14a; 14b) which is configured for coupling with the fastening rail (12a; 12b), with a force storage unit (18a; 18b), with an actuation unit (20a; 20b) and with a gear unit (22a; 22b), wherein the gear unit (22a; 22b) is configured for pre-tensioning the force storage unit (18a; 18b) in an unlocking operation, for relaxing the force storage unit (18a; 18b) in a locking operation and for converting a rotation of the actuation unit (20a; 20b) into a movement of the movable fastening means (14a; 14b), wherein the actuation unit (20a; 20b) comprises a pivotally supported actuation lever (38a; 38b), **characterised by** a tool engagement element (56a), which is configured to accommodate an unlocking tool for carrying out the unlocking operation, wherein the actuation lever (38a; 38b) is sunk in the base body (24a; 24b) in a closed state.

2. Seat fastening device according to claim 1, **characterised in that**, for a direct force transfer between the gear unit (22a; 22b) and the force storage unit (18a; 18b), a support means (28a; 84a) is arranged between the gear unit (22a; 22b) and the force storage unit (18a; 18b).

3. Seat fastening device at least according to claim 2, **characterised in that** the force storage unit (18a; 18b) comprises at least one surface facing towards the gear unit (22a; 22b) and implementing the support means (28a; 84a).

4. Seat fastening device according to claim 2, **characterised in that** the support means (28a; 84a) and the fastening means (14a; 14b) each comprise at least one carrier element (16a; 32a; 82a), said carrier elements (16a; 32a) cooperating for carrying along the fastening means (14a; 14b) in a locking operation.

5. Seat fastening device according to claim 4, **characterised in that**, following an unlocking operation, the carrier element (16a) of the fastening means (14a; 14b) rests on the carrier element (32a; 82a) of the support means (28a; 84a) without any load except for gravity, the carrier element (32a; 82a) of the support means (28a; 84a) thus realising a holder for the fastening means (14a; 14b).

6. Seat fastening device according to one of the preceding claims, **characterised in that** the tool engagement element (56a) is arranged spaced apart from a pivot axis of the actuation unit (20a; 20b).

7. Seat fastening device according to one of the preceding claims, **characterised in that** the unlocking operation is effected via a rotation of the actuation lever (38a; 38b) by 180° or less.

8. Seat fastening device according to one of the preceding claims, **characterised in that** the gear unit (22a; 22b) comprises a cam gear (46a; 46b).

9. Seat fastening device according to claim 8, **characterised in that**, in at least one operating state, the cam gear (46b) is in an operative connection with a seat frame (10b) that is to be fastened.

10. Seat fastening device according to one of the preceding claims, **characterised in that** the force storage unit (18a; 18b) comprises a spring pack (34a; 34b).

11. Seat fastening device according to claim 10, **characterised in that** the spring pack (34a; 34b) is arranged coaxially with the movement direction (36a; 36b) of the fastening means (14a; 14b).

12. Seat, in particular flight passenger seat, with a seat fastening device according to one of the preceding claims.

## Revendications

1. Dispositif de fixation de siège ou d'amarrage des fardeaux à un rail de fixation (12a ; 12b) attaché à un sol (66a), avec au moins un corps de base (24a ; 24b), avec au moins un moyen de fixation mobile (14a ; 14b), lequel est prévu pour un raccordement avec le rail de fixation (12a ; 12b), avec une unité accumulateur d'énergie (18a ; 18b), une unité d'actuation (20a ; 20b) et une unité boîte de vitesses (22a ; 22b), l'unité boîte de vitesses (22a ; 22b) étant configurée pour pré-contraindre l'unité accumulateur d'énergie (18a ; 18b) dans un procès de déverrouillage, pour relâcher l'unité accumulateur d'énergie (18a ; 18b) dans un procès de verrouillage et pour convertir une rotation de l'unité d'actuation (20a ; 20b) dans un mouvement du moyen de fixation mobile (14a ; 14b), l'unité d'actuation (20a ; 20b) comprenant un levier d'actuation (38a ; 38b) supporté de façon pivotable, **caractérisé par** une prise pour un outil (56a) configurée à recevoir un outil de déverrouillage pour exécuter le procès de déverrouillage, le levier d'actuation (38a ; 38b) étant, en état fermé, enfoncé dans le corps de base (24a ; 24b).

2. Dispositif de fixation de siège selon la revendication 1, **caractérisé en ce que**, pour une transmission directe de force entre l'unité boîte de vitesses (22a ; 22b) et l'unité accumulateur d'énergie (18a ; 18b), un élément de support (28a ; 84a) est disposé entre l'unité boîte de vitesses (22a ; 22b) et l'unité accumulateur d'énergie (18a ; 18b).

3. Dispositif de fixation de siège au moins selon la revendication 2, **caractérisé en ce que** l'unité accumulateur d'énergie (18a ; 18b) comporte au moins une superficie tournée vers l'unité boîte de vitesses (22a ; 22b) et réalisant l'élément de support (28a ; 84a).

4. Dispositif de fixation de siège selon la revendication 2, **caractérisé en ce que** chacun de l'élément de support (28a ; 84a) et le moyen de fixation (14a ; 14b) comporte au moins un élément entraîneur (16a, 32a ; 82a), les éléments entraîneurs (16a ; 32a ; 82a) coopérant dans un procès de verrouillage pour un entraînement du moyen de fixation (14a ; 14b).

5. Dispositif de fixation de siège selon la revendication 4, **caractérisé en ce qu'**après d'un procès de déverrouillage l'élément entraîneur (16a) du moyen de fixation (14a ; 14b) repose, sans être chargé par des forces sauf la gravité, sur l'élément entraîneur (32a ; 82a) de l'élément de support (28a ; 84a), lequel ainsi forme un maintien pour le moyen de fixation (14a ; 14b).

6. Dispositif de fixation de siège selon l'une quelconque des revendications précédentes, **caractérisé en ce que** la prise pour un outil (56a) est disposée espacée d'un axe de pivotement de l'unité d'actuation (20a ; 20b).

7. Dispositif de fixation de siège selon l'une quelconque des revendications précédentes, **caractérisé en ce que** le procès de déverrouillage est effectué par le biais d'une rotation du levier d'actuation (38a ; 38b) par 180° ou moins que ça.

8. Dispositif de fixation de siège selon l'une quelconque des revendications précédentes, **caractérisé en ce que** l'unité boîte de vitesses (22a ; 22b) comporte un mécanisme à came (46a ; 46b).

9. Dispositif de fixation de siège selon la revendication 8, **caractérisé en ce qu**', en au moins un état opératif, le mécanisme à came (46b) est en connexion fonctionnelle avec un cadre de siège (10) qui est à fixer.

10. Dispositif de fixation de siège selon l'une quelconque des revendications précédentes, **caractérisé en ce que** l'unité accumulateur d'énergie (18a ; 18b) comporte un paquet de ressorts (34a ; 34b).

11. Dispositif de fixation de siège selon la revendication 10, **caractérisé en ce que** le paquet de ressorts (34a ; 34b) est disposé coaxialement avec la direction de mouvement (36a ; 36b) du moyen de fixation (14a ; 14b).

12. Siège, notamment siège de passager d'avion, avec un dispositif de fixation de siège selon l'une quelconque des revendications précédentes.
